# EUROPEAN PATENT APPLICATION

(11) **EP 3 205 818 A1**
(43) Date of publication of application: **16.08.2017**
(21) Application number: 17155216.9
(22) Date of filing: 08.02.2017
(51) Int. Cl.: F01D 5/08, F01D 5/18, F02C 7/12

(54) **GAS TURBINE ENGINE METERING DEVICE WITH A SHAPE MEMORY ELEMENT AND METHOD FOR MODULATING COOLING AIRFLOW TO A GAS TURBINE COMPONENT**

(30) Priority: 12.02.2016 US 201615042985
(71) Applicant: United Technologies Corporation, Farmington, CT 06032 (US)
(72) Inventor: JENNINGS, Timothy J., West Hartford, CT Connecticut 06107 (US); SLAVENS, Thomas N., Moodus, CT Connecticut 06469 (US)
(74) Representative: Leckey, David Herbert

(57) **Abstract**

Methods and systems for modulating airflow may include a metering device (400) comprising a face (405), an aperture (410) through the face (405) being defined by an aperture rim (413), and a metering appendage (414) disposed adjacent to the aperture (410) and coupled to the aperture rim (413) and/or the face (405). The metering appendage (414) may comprise a shape memory alloy and may be configured to transition from a first geometry to a second geometry.

## Description

### FIELD

The present disclosure relates generally to gas turbine engines. More particularly, the present disclosure relates to modulating airflow within a gas turbine engine.

### BACKGROUND

Gas turbine engines perform under varying flight conditions during an aircraft flight. Varying flight conditions may require varying amounts of cooling air to flow through the gas turbine engine. Gas turbine engines benefit from modulating cooling airflow to meet the cooling requirements of various flight conditions.

### SUMMARY

In accordance with this disclosure, a metering device may comprise a face, an aperture through the face being defined by an aperture rim, and a metering appendage disposed adjacent to the aperture and coupled to the aperture rim and/or the face. The metering appendage may comprise a shape memory alloy and may be configured to transition from a first geometry to a second geometry.

In various embodiments, the metering appendage may extend substantially perpendicularly from the face.

The first geometry may be an open geometry and/or a closed geometry.

The second geometry may be the closed geometry and/or the open geometry.

In various embodiments, the metering appendage may be configured to transition from the second geometry to the first geometry.

In various embodiments, the metering appendage may be configured to transition from the first geometry to the second geometry in response to the shape memory alloy in the metering appendage achieving a first activation temperature.

The metering appendage may be configured to transition from the second geometry to the first geometry in response to the shape memory alloy in the metering appendage achieving a second activation temperature. The first activation temperature may be below a threshold temperature and the second activation temperature may be above the threshold temperature. The threshold temperature may be between 500°F (206°C) and 1500°F (816°C).

In various embodiments, the shape memory alloy may comprise a Ti-Ni alloy, a (Ti-Zr)-Ni alloy, a (Ti-Hf)-Ni alloy, a Ti-(Ni-Pd) alloy, a Ti-(Ni-Au) alloy, a Ti-(Ni-Pt) alloy, a Ti-Al alloy, a Ti-Nb alloy, Ti-Pd alloy, and/or a Ti-Ta alloy. In various embodiments, a component of a gas turbine engine may comprise the metering device.

Also disclosed is a gas turbine engine which may comprise a component and a metering device coupled to the component. The metering device may comprise a face, an aperture through the face defined by an aperture rim, and a metering appendage coupled to the aperture rim and/or the face, wherein the metering appendage comprises a shape memory alloy.

In various embodiments, the component may comprise a cooling hole. The cooling hole may be in fluid communication with the aperture, and the metering appendage may be disposed within the cooling hole.

In various embodiments, metering appendage may be configured to transition between a first geometry and a second geometry.

Also disclosed is a method for modulating cooling airflow to a component in a gas turbine engine may comprise coupling a metering device to the component, activating a shape memory alloy in a metering appendage in response to the shape memory alloy in the metering appendage achieving an activation temperature, and transitioning the metering appendage from a first geometry and/or a second geometry to the first geometry and/or the second geometry. The metering device may comprise an aperture and the metering appendage disposed adjacent to the aperture, wherein the metering appendage may comprise the shape memory alloy and the metering appendage may be configured to transition between the first geometry and the second geometry.

In various embodiments, transitioning the metering appendage may comprise transitioning the metering appendage from an open geometry and/or a closed geometry to a second geometry.

Transitioning the metering appendage may further comprise transitioning the metering appendage from the open geometry and/or the closed geometry to the open geometry and/or the closed geometry.

In various embodiments, transitioning the metering appendage may comprise transitioning the metering appendage from the closed geometry to the open geometry in response to the activation temperature being above a threshold temperature.

In various embodiments, transitioning the metering appendage may comprise transitioning the metering appendage from the open geometry to the closed geometry in response to the activation temperature being below a threshold temperature.

### BRIEF DESCRIPTION OF THE DRAWINGS

The subject matter of the present disclosure is particularly pointed out and distinctly claimed in the concluding portion of the specification. A more complete understanding of the present disclosure, however, may best be obtained by referring to the detailed description and claims when considered in connection with the drawing figures.
FIG. 1 illustrates a schematic cross-section view of a gas turbine engine, in accordance with various embodiments;
FIG. 2 illustrates a schematic cross-section view of a gas turbine engine showing airflow patterns, in accordance with various embodiments;
FIG. 3 illustrates a perspective view of components in a gas turbine engine, in accordance with various embodiments;
FIGS. 4A and 4B illustrate perspective views of a metering device in an open geometry, in accordance with various embodiments;
FIGS. 4C and 4D illustrate perspective views of a metering device in a closed geometry, in accordance with various embodiments;
FIG. 5 illustrates a perspective view of a rotor, in accordance with various embodiments; and
FIG. 6 illustrates a method for modulating cooling airflow in a gas turbine engine, in accordance with various embodiments.

### DETAILED DESCRIPTION

All ranges and ratio limits disclosed herein may be combined. It is to be understood that unless specifically stated otherwise, references to "a," "an," and/or "the" may include one or more than one and that reference to an item in the singular may also include the item in the plural.

The detailed description of various embodiments herein makes reference to the accompanying drawings, which show various embodiments by way of illustration. While these various embodiments are described in sufficient detail to enable those skilled in the art to practice the disclosure, it should be understood that other embodiments may be realized and that logical, chemical, and mechanical changes may be made without departing from the scope of the disclosure. Thus, the detailed description herein is presented for purposes of illustration only and not of limitation. For example, the steps recited in any of the method or process descriptions may be executed in any order and are not necessarily limited to the order presented. Furthermore, any reference to singular includes plural embodiments, and any reference to more than one component or step may include a singular embodiment or step. Also, any reference to attached, fixed, connected, or the like may include permanent, removable, temporary, partial, full, and/or any other possible attachment option. Additionally, any reference to without contact (or similar phrases) may also include reduced contact or minimal contact.

As used herein, "aft" refers to the direction associated with the tail (e.g., the back end) of an aircraft, or generally, to the direction of exhaust of the gas turbine engine. As used herein, "forward" refers to the direction associated with the nose (e.g., the front end) of an aircraft, or generally, to the direction of flight or motion.

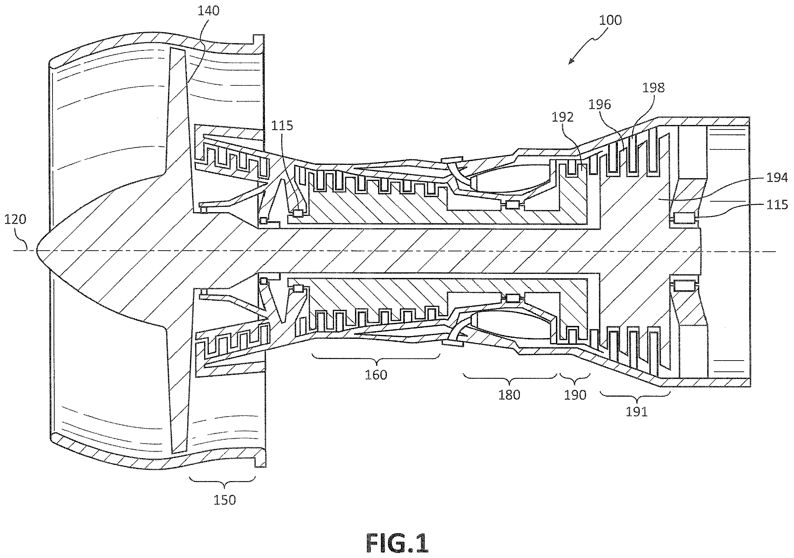

Referring to FIG. 1, a gas turbine engine 100 is illustrated according to various embodiments. Gas turbine engine 100 is disposed about axis of rotation 120. Gas turbine engine 100 may comprise a fan 140, compressor sections 150 and 160, a combustion section 180, and turbine sections 190, 191. Air compressed in compressor sections 150, 160 may be mixed with fuel and burned in combustion section 180 and expanded across turbine sections 190, 191. Turbine sections 190, 191 may include high pressure rotors 192 and low pressure rotors 194, which rotate in response to the expansion. Turbine sections 190, 191 may comprise alternating rows of rotary airfoils or blades 196 and static airfoils or vanes 198. A plurality of bearings 115 may support spools to which the rotors are affixed in gas turbine engine 100. FIG. 1 provides a general understanding of the sections in a gas turbine engine, and is not intended to limit the disclosure. The present disclosure may extend to all types of turbine engines, including turbofan gas turbine engines and turbojet engines, for all types of applications.

The forward-aft positions of gas turbine engine 100 lie along axis of rotation 120. For example, fan 140 may be referred to as forward of turbine section 190 and turbine section 190 may be referred to as aft of fan 140. Typically, during operation of gas turbine engine 100, air flows from forward to aft, for example, from fan 140 to turbine section 190. As air flows from fan 140 to the more aft components of gas turbine engine 100, axis of rotation 120 may also generally define the direction of the air stream flow.

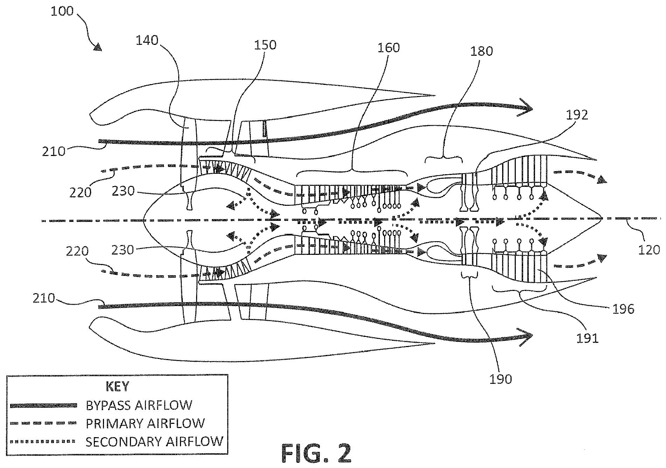

Referring to FIG. 2, a gas turbine engine 100 is illustrated according to various embodiments. Elements with the like element numbering as depicted in FIG. 1, are intended to be the same and will not be repeated for the sake of clarity. In various embodiments, during operation of gas turbine engine 100, airflow that enters fan 140 may be divided between bypass airflow 210, primary airflow 220, and/or secondary airflow 230. Bypass airflow 210 provides the majority of the thrust produced by the gas turbine engine 100. In various embodiments, bypass airflow 210 may flow outside of the engine core in gas turbine engine 100. In various embodiments, bypass airflow 210 may comprise a second stream airflow and/or a third stream airflow. Primary airflow 220 may be compressed as it travels through compressor sections 150, 160, and then mixed with fuel and burned in combustion section 180. The burned mix of air and fuel may then expand across turbine sections 190, 191, turning the turbines and generating additional thrust. Secondary airflow 230 may be any airflow different from the bypass airflow 210 or primary airflow 220. Secondary airflow 230 may be utilized for multiple purposes including, for example, cooling and pressurization. Secondary airflow 230 may ultimately be at least partially injected into primary airflow 220 at various points to be used, for example, to cool various components.

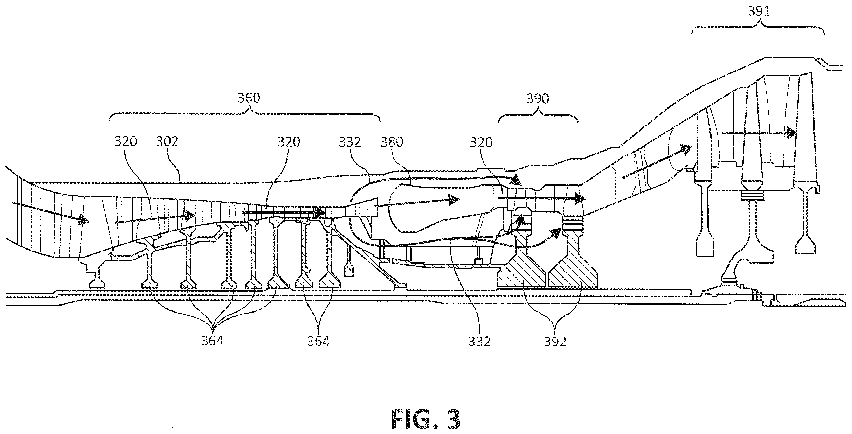

FIG. 3 illustrates the primary flow gas path through a gas turbine engine, in accordance with various embodiments. The gas turbine engine may include a case 302, a high-pressure compressor (HPC) 360, a combustor 380, a high pressure turbine (HPT) 390, and a low-pressure turbine (HPT) 391. Gas may flow into HPC 360 along primary airflow 320. Gas flowing through HPC 360 in primary airflow 320 may be compressed, resulting in an increase in pressure and temperature relative to the pressure and temperature upon entering HPC 360.

In various embodiments, HPC 360, combustor 380, and/or HPT 390 may operate at relatively high temperatures (e.g., from 1000°F/537°C to 2000°F/1093°C or higher). The airflow around HPC 360, combustor 380, and/or HPT 390 may similarly experience relatively high temperatures. As engine speed is increased, such as during transition from ground idle to takeoff power, the temperatures at components within the gas turbine engine, for example HPC rotors 364 and/or their blades, may increase and may thus benefit from cooling. In order for the gas turbine engine to continue optimal performance during operation, or improve performance during operation, HPC 360, combustor 380, and/or HPT 390 and the surrounding airflow may thus benefit from cooling. In various embodiments, a cooling airflow 332 may be taken from primary airflow 320 and directed to components in the gas turbine engine that may thus benefit from cooling, such as HPT rotors 392 and/or HPC rotors 364.

Various flight conditions may cause the components in a gas turbine engine to achieve different temperatures. Accordingly, components in the gas turbine engine may benefit from different flow rates (i.e., volume per unit time) of cooling airflow depending on the flight condition in which the gas turbine engine is operating. For example, during a high power condition, such as take-off, the components of the gas turbine engine bear a greater heat load than at other times. Therefore, during high power conditions, it may be beneficial for more cooling airflow to be directed to cool those components. Conversely, during a low power condition, such as cruise, components of the gas turbine engine bear less heat load. Therefore, during lower power conditions, less cooling airflow may be directed to cool those components.

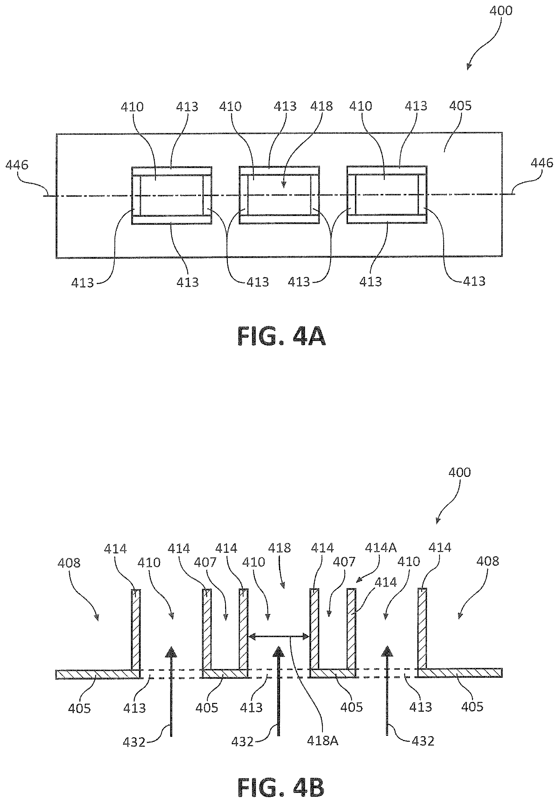

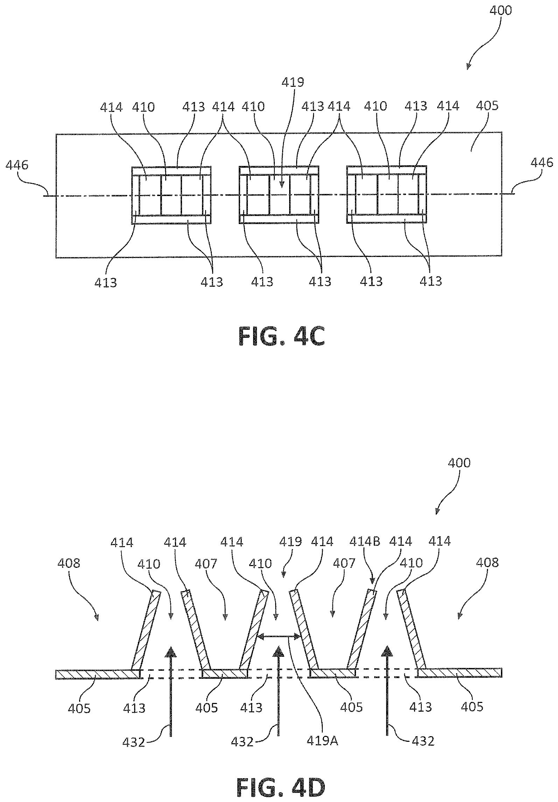

Referring to FIGS. 4A-4D, a metering device 400 is depicted, in accordance with various embodiments. FIGS. 4B and 4D depict metering device 400 viewed along cross-sectional line 446. Metering device 400 may comprise a face 405, at least one aperture 410 in face 405 being defined by an aperture rim 413, and/or at least one metering appendage 414. Apertures 410 may allow cooling airflow 432 through metering device 400. Metering appendages 414 may be coupled to face 405 and/or aperture rim 413. In various embodiments, metering appendages 414 may comprise at least a portion of aperture rim 413. Metering appendages 414 may extend substantially perpendicularly from face 405, or may be coupled to face 405 and/or aperture rim 413 in any other suitable geometry (e.g., angled relative to face 405). Metering appendages 414 may be disposed in any way and/or be any suitable shape for modulating the size of apertures 410, and/or modulating the flow and/or flow rate of cooling airflow 432 through apertures 410.

In various embodiments, metering device 400 and/or metering appendages 414 may comprise a shape memory alloy. A shape memory alloy may be an alloy configured to transition from one geometry to another geometry in response to achieving an activation temperature. Shape memory alloys may be two-way shape memory alloys, in which the shape memory alloy may transition back and forth between one geometry and another geometry based on activation temperatures that are above or below a threshold temperature.

In various embodiments, a shape memory alloy may comprise Titanium (Ti), Nickel (Ni), Zirconium (Zr), Hafnium (Hf), Palladium (Pd), Gold (Au), Platinum (Pt), Aluminum (Al), Niobium (Nb), and/or Tantalum (Ta). For example, the shape memory alloy may comprise a Ti-Ni alloy, a (Ti-Zr)-Ni alloy, a (Ti-Hf)-Ni alloy, a Ti-(Ni-Pd) alloy, a Ti-(Ni-Au) alloy, a Ti-(Ni-Pt) alloy, a Ti-Al alloy, a Ti-Nb alloy, Ti-Pd alloy, and/or a Ti-Ta alloy. The shape memory alloy may be configured to transition from a first geometry to a second geometry, and/or from the second geometry to the first geometry, in response to the shape memory alloy achieving an activation temperature. The first geometry may affect the flow rate of cooling airflow 432 through apertures 410 distinctly from the effect on the flow rate of cooling airflow 432 through apertures 410 by the second geometry.

In various embodiments, the first geometry may be an open geometry or a closed geometry. In various embodiments, the second geometry may be an open geometry or a closed geometry. In various embodiments, the open geometry, such as open geometry 414A, may comprise metering appendage 414 being positioned in such a way as to allow a greater flow rate of cooling airflow 432 through aperture 410 than when metering appendage 414 is in the closed geometry, such as closed geometry 414B. The closed geometry, such as closed geometry 414B, may comprise metering appendage 414 being positioned in such a way as to allow a lesser flow rate of cooling airflow 432 through aperture 410 than when metering appendage 414 is in the open geometry, such as open geometry 414A.

In various embodiments, as depicted in FIGS. 4A-4D, open geometry 414A may cause aperture 410 to be more open (i.e., to have a larger cross sectional area), illustrated by length 418A of aperture 410, than closed geometry 414B. Closed geometry 414B may cause aperture 410 to be less open (i.e., to have a smaller cross sectional area), illustrated by length 419A which is shorter than length 418A, than open geometry 414A. Open geometry 414A assumed by metering appendage 414 may be any position that causes apertures 410 to be more open than when metering appendage 414 is in the closed geometry 414B. In various embodiments, closed geometry 414B may comprise apertures 410 being completely closed, in which no cooling airflow 432 passes through apertures 410. Open geometry 414A may allow more cooling airflow 432 through apertures 410 than closed geometry 414B. In other words, the greater cross sectional area of aperture 410 when metering appendage 414 is in open geometry 414A may allow a greater flow rate of cooling airflow 432 through aperture 410 than when metering appendage 414 is in closed geometry 414B, having a smaller cross sectional area.

In various embodiments, the open geometry may comprise metering appendages 414 being positioned in a way such that aperture 410 provides a more fluid passage for cooling airflow 432 than the closed geometry. The open geometry providing a more fluid passage through aperture 410 may or may not affect the cross sectional area of aperture 410. The open geometry providing a more fluid passage for cooling airflow 432 may result in a greater flow rate of cooling airflow 432 through aperture 410 than the closed geometry. Such an open configuration may also be referred to as a "low-loss flow geometry". In various embodiments, the closed geometry may comprise metering appendages 414 being position in a way such that aperture 410 provides a less fluid passage for cooling airflow 432 than the open geometry. The closed geometry providing a less fluid passage through aperture 410 may or may not affect the cross sectional area of aperture 410. The closed geometry providing a less fluid passage for cooling airflow 432 may result in a lesser flow rate of cooling airflow 432 through aperture 410 than the open geometry. Such a closed configuration may also be referred to as a "high-loss flow geometry". For example, the closed configuration may include metering appendages 414 being positioned to create areas in and/or around aperture 410 where cooling airflow 432 may be impeded while traveling through aperture 410, thus decreasing the flow rate of cooling airflow 432, without affecting the cross sectional area of aperture 410.

As depicted in FIGS. 4A-4D, in various embodiments, metering appendages 414 may transition inward, toward apertures 410, in response to transitioning from open geometry 414A to closed geometry 414B. Conversely, in various embodiments, metering appendages 414 may transition outward, away from apertures 410, when transitioning from closed geometry 414B to open geometry 414A. In various embodiments, the metering device 400 itself may comprise a shape memory alloy and transition between a first geometry and a second geometry to vary the size of apertures 410 and/or the flow rate of cooling airflow 432.

In operation, in various embodiments, in response to the shape memory alloy in metering device 400 and/or metering appendage 414 achieving a first activation temperature, which may be below a threshold temperature, metering device 400 and/or metering appendages 414 may remain in the first geometry (which may be, for example, closed geometry 414B). In response to the temperature of the shape memory alloy in metering device 400 and/or metering appendage 414 rising from the first activation temperature to a second activation temperature that is higher than the threshold temperature, metering device 400 and/or metering appendages 414 may transition from the first geometry to the second geometry (e.g., from closed geometry 414B to open geometry 414A). In various embodiments, metering device 400 and/or metering appendages 414 may remain in the second geometry in response to the temperature remaining above the threshold temperature. In response to the temperature of the shape memory alloy in metering device 400 and/or metering appendages 414 decreasing below the threshold temperature to a third activation temperature, metering device 400 and/or metering appendages 414 may transition back to the first geometry (e.g., from open geometry 414A to closed geometry 414B). The third activation temperature may be the same temperature as the first activation temperature, or any other temperature below the threshold temperature.

The threshold temperature may be a temperature at which the shape memory alloy comprised in metering device 400 and/or metering appendages 414 transitions between the first geometry and the second geometry. In various embodiments, the shape memory alloy comprised in metering device 400 and/or metering appendages 414 may be configured to transition between the first geometry and the second geometry at a threshold temperature that indicates an aircraft is transitioning from a high power flight condition to a low power flight condition, or vice versa. For instance, temperatures above the threshold temperature may indicate that the aircraft is operating in a high power flight condition, and temperatures below the threshold temperature may indicate that the aircraft is operating in a low power flight condition. In various embodiments, the shape memory alloy may transition between the first geometry and the second geometry in response to achieving an activation temperature above or below a threshold temperature of about 1000°F (538°C), wherein the term "about" in this context may only refer to +/- 200°F. In various embodiments, the threshold temperature may be between 500°F (206°C) and 1500°F (816°C).

During an aircraft flight, in response to an aircraft transitioning from a high power flight condition to a low power flight condition, the temperature of the shape memory alloy in metering device 400 and/or metering appendages 414 may transition from above to below the threshold temperature, and in response, metering device 400 and/or metering appendages 414 may transition from open geometry 414A to closed geometry 414B. Similarly, in response to an aircraft transitioning from a low power flight condition to a high power flight condition, the temperature achieved by the shape memory alloy in metering device 400 and/or metering appendages 414 may transition from below to above the threshold temperature, and in response, metering device 400 and/or metering appendages 414 may transition from closed geometry 414B to open geometry 414A.

In various embodiments, shape memory alloys may comprise geometries in addition to a first geometry and a second geometry. Shape memory alloys may comprise numerous geometries between which the shape memory alloys transition in response to the shape memory alloy achieving one or more activation temperatures.

The ability of metering device 400 and/or metering appendages 414 to transition between a first geometry and a second geometry (e.g., between open geometry 414A and closed geometry 414B), may allow better control during various flight conditions over the flow rate of cooling airflow directed to a component of a gas turbine engine. For instance, during a low power flight condition, such as cruise, less cooling airflow 432 may be used because the gas turbine engine components are operating at a first activation temperature, which may be below the threshold temperature. Therefore, metering device 400 and/or metering appendages 414 may assume closed geometry 414B to allow a lesser flow rate of cooling airflow 432 through metering device 400 to meet the cooling requirements of the low power flight condition. Conversely, during a high power flight condition such as take-off, more cooling airflow 432 may be used because the gas turbine engine components are operating at a second activation temperature. For example, the first activation temperature may be above the threshold temperature. Therefore, metering device 400 and/or metering appendages 414 may assume open geometry 414A to allow a greater flow rate of cooling airflow 432 through metering device 400 to meet the cooling parameters of the high power flight condition.

In various embodiments, varying the amount of cooling airflow 432 allowed through metering device 400 may improve the efficiency of a gas turbine engine. With a traditional aperture to allow cooling airflow to a component of a gas turbine engine, the aperture size is fixed, and thus, the flow rate of cooling airflow is fixed. Therefore, during low power flight conditions that require less cooling and airflow through the engine, the same amount of airflow travels through the fixed apertures, which may be an unnecessarily large amount of airflow. This causes the gas turbine engine to operate less efficiently. By modulating the size of apertures 410 based on the flight condition and the flow rate of cooling airflow allowed for the flight condition, the most efficient amount of airflow can be determined and allowed through the gas turbine engine for that flight condition. Therefore, the efficiency of the gas turbine engine may be improved by allowing an efficient flowrate of cooling airflow 432 through metering device 400. Additionally, the use of metering device 400 comprising a shape memory alloy to modulate airflow through the gas turbine engine is less mechanically complex than traditional devices for modulating airflow.

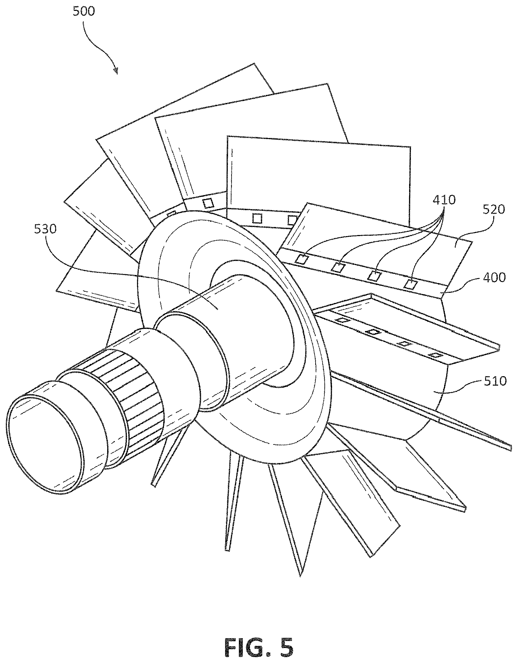

In various embodiments, metering device 400 may be coupled to a component within a gas turbine engine to modulate the amount (or flow rate) of cooling airflow provided to the component at various flight conditions during an aircraft flight. Referring to FIG. 5, a rotor 500 which may be used in the gas turbine engine, or in any other suitable type of engine, is illustrated. Rotor 500 may comprise a rotor disk 510 which supports a circumferential array of regularly spaced rotor blades 520. The rotor disk 510 and rotor blades 520 may be integrally molded, though in various embodiments rotor blades 520 are formed as separate components and coupled to rotor disk 510. The rotor disk 510 may include a hub 530 for engaging a central shaft. Rotor blades 520 may comprise cooling holes configured to allow cooling airflow into rotor blades 520 to cool them during aircraft operation.

With combined reference to FIGS. 4A-4D and 5, in various embodiments, metering device 400 may be coupled to rotor blade 520 on rotor 500. Metering device 400 may be coupled to rotor blade 520 at a position adjacent to rotor disk 510, or any other suitable location. Apertures 410 may align with the cooling holes in rotor blades 520 such that the apertures 410 are in fluid communication with the cooling holes. In various embodiments, metering appendages 414 may be disposed within the cooling holes in rotor blades 520. Areas 407, 408 adjacent to metering device 400 may be occupied by rotor blade material around the cooling holes in rotor blades 520.

In various embodiments, metering appendages 414 may be configured to modulate the amount of cooling airflow 432 being allowed into rotor blades 520. In a low power flight condition, in response to the temperature of rotor blades 520 being at a first activation temperature (which may be below the threshold temperature), metering appendages may be in closed geometry 414B (corresponding to a smaller cross sectional area of aperture 410) to allow a lesser flow rate of cooling airflow 432 into rotor blades 520, because less cooling airflow flow rate is needed than that required during a high power flight condition. In a high power flight condition, in response to the temperature of rotor blades 520 rising to a second activation temperature (which may be above the threshold temperature), metering appendages 414 may assume open geometry 414A (corresponding to a greater cross sectional area of aperture 410) to allow a greater flow rate of cooling airflow 432 than was required during the low power flight condition. Metering appendages 414 may remain in open geometry 414A in response to the temperature around rotor 500 remaining above the threshold temperature.

For illustrative purposes, metering devices 400 are coupled to rotor blades 520, as depicted in FIG. 5. It should be noted, however, that it would not be outside the scope of this disclosure to couple metering device 400 to any component within a gas turbine engine for modulating cooling airflow to that component. For instance, referring to FIG. 3, metering device 400 may be coupled to HPC 360 to modulate the amount of cooling airflow 332 being taken from the primary airflow 320. Metering device 400 may be coupled to the component in a gas turbine engine by welding, brazing, bolting, molding, one or more adhesives, and/or other suitable methods.

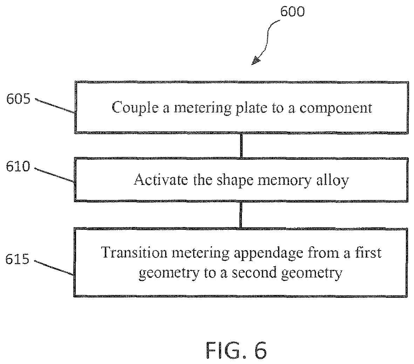

Referring to FIG. 6, in accordance with various embodiments, a method for modulating cooling airflow to a component in a gas turbine engine is depicted. With combined reference to FIGS. 4-6, in various embodiments, a metering device 400 may be coupled to a component (step 605) in a gas turbine engine. The component may be a rotor blade 520, or any other component. Metering device 400 and/or metering appendages 414 may comprise a shape memory alloy configured to transition between a first geometry and a second geometry in response to achieving an activation temperature. The shape memory alloy may be activated (step 610) by achieving an activation temperature. In response to the shape memory alloy achieving the activation temperature, metering device 400 and/or metering appendages 414 may transition from a first geometry to a second geometry (step 615). The first geometry may be open geometry 414A and/or closed geometry 414B. The second geometry may be open geometry 414A and/or closed geometry 414B. For example, in response to a first activation temperature transitioning below the threshold temperature, metering device 400 and/or metering appendages 414 may transition from open geometry 414A to closed geometry 414B to allow a lesser flow rate of cooling airflow 432. In response to a second activation temperature transitioning above the threshold temperature, metering device 400 and/or metering appendages 414 may transition from closed geometry 414B to open geometry 414A to allow a greater flow rate of cooling airflow 432.

Benefits, other advantages, and solutions to problems have been described herein with regard to specific embodiments. Furthermore, the connecting lines shown in the various figures contained herein are intended to represent exemplary functional relationships and/or physical couplings between the various elements. It should be noted that many alternative or additional functional relationships or physical connections may be present in a practical system. However, the benefits, advantages, solutions to problems, and any elements that may cause any benefit, advantage, or solution to occur or become more pronounced are not to be construed as critical, required, or essential features or elements of the disclosure. The scope of the disclosure is accordingly to be limited by nothing other than the appended claims, in which reference to an element in the singular is not intended to mean "one and only one" unless explicitly so stated, but rather "one or more." Moreover, where a phrase similar to "at least one of A, B, or C" is used in the claims, it is intended that the phrase be interpreted to mean that A alone may be present in an embodiment, B alone may be present in an embodiment, C alone may be present in an embodiment, or that any combination of the elements A, B and C may be present in a single embodiment; for example, A and B, A and C, B and C, or A and B and C. Different cross-hatching is used throughout the figures to denote different parts but not necessarily to denote the same or different materials.

Systems, methods and apparatus are provided herein. In the detailed description herein, references to "one embodiment", "an embodiment", "various embodiments", etc., indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described. After reading the description, it will be apparent to one skilled in the relevant art(s) how to implement the disclosure in alternative embodiments.

As used herein, the terms "comprises", "comprising", or any other variation thereof, are intended to cover a non-exclusive inclusion, such that a process, method, article, or apparatus that comprises a list of elements does not include only those elements but may include other elements not expressly listed or inherent to such process, method, article, or apparatus.

## Claims

1. A metering device (400), comprising:
a face (405);
an aperture (410) through the face (405), the aperture (410) being defined by an aperture rim (413); and
a metering appendage (414) disposed adjacent to the aperture (410) and coupled to at least one of the aperture rim (413) or the face (405), wherein the metering appendage (414) comprises a shape memory alloy,
wherein the metering appendage (414) is configured to transition from a first geometry to a second geometry.

2. The metering device of claim 1, wherein the metering appendage (414) extends substantially perpendicularly from the face (405).

3. The metering device of claim 1 or 2, wherein the shape memory alloy comprises at least one of a Ti-Ni alloy, a (Ti-Zr)-Ni alloy, a (Ti-Hf)-Ni alloy, a Ti-(Ni-Pd) alloy, a Ti-(Ni-Au) alloy, a Ti-(Ni-Pt) alloy, a Ti-Al alloy, a Ti-Nb alloy, Ti-Pd alloy, or a Ti-Ta alloy.

4. The metering device of claim 1, 2 or 3, wherein the first geometry is an open geometry (414A) or a closed geometry (414B), and the second geometry is a closed geometry (414B) or an open geometry (414A), respectively.

5. The metering device of any preceding claim, wherein the metering appendage (414) is configured to transition from the second geometry to the first geometry, wherein the metering appendage (414) is configured to transition from the first geometry to the second geometry in response to the shape memory alloy in the metering appendage (414) achieving a first activation temperature, and is configured to transition from the second geometry to the first geometry in response to the shape memory alloy in the metering appendage (414) achieving a second activation temperature;
wherein, optionally, the first activation temperature is below a threshold temperature and the second activation temperature is above the threshold temperature, wherein the threshold temperature, for example, is between 500°F (206°C) and 1500°F (816°C).

6. A component of a gas turbine engine (100) comprising the metering device of any preceding claim.

7. A gas turbine engine (100), comprising:
a component; and
a metering device (400) coupled to the component,
wherein the metering device (400) comprises:
a face (405);
an aperture (410) through the face (405), the aperture (410) being defined by an aperture rim (413); and
a metering appendage (414) coupled to at least one of the aperture rim (413) or the face (405), wherein the metering appendage (414) comprises a shape memory alloy.

8. The gas turbine engine of claim 7, wherein the component comprises a cooling hole.

9. The gas turbine engine of claim 8, wherein the cooling hole is in fluid communication with the aperture (410), and the metering appendage (414) is disposed within the cooling hole.

10. The gas turbine engine of claim 7, 8 or 9, wherein the metering appendage (414) is configured to transition between a first geometry and a second geometry.

11. A method for modulating cooling airflow to a component in a gas turbine engine (100), comprising:
coupling a metering device (400) to the component, the metering device (400) comprising an aperture (410) and a metering appendage (414) disposed adjacent to the aperture (410), wherein the metering appendage (414) comprises a shape memory alloy,
wherein the metering appendage (414) is configured to transition between a first geometry and a second geometry;
activating the shape memory alloy in the metering appendage (414) in response to the shape memory alloy in the metering appendage (414) achieving an activation temperature; and
transitioning the metering appendage (414) from at least one of the first geometry or the second geometry to at least one of the first geometry or the second geometry.

12. The method of claim 11, wherein the transitioning the metering appendage (414) comprises transitioning the metering appendage (414) from at least one of an open geometry (414A) or a closed geometry (414B) to a second geometry.

13. The method of claim 12, wherein the transitioning the metering appendage (414) further comprises transitioning the metering appendage from at least one of the open geometry (414A) or the closed geometry (414B) to at least one of the open geometry (414A) or the closed geometry (414B).

14. The method of claim 13, wherein the transitioning the metering appendage (414) comprises transitioning the metering appendage (414) from the closed geometry (414B) to the open geometry (414A) in response to the activation temperature being above a threshold temperature.

15. The method of claim 13 or 14, wherein the transitioning the metering appendage (414) comprises transitioning the metering appendage (414) from the open geometry (414A) to the closed geometry (414B) in response to the activation temperature being below a threshold temperature.
